# FASCICULE DE BREVET EUROPEEN

(11) **EP 4 441 341 B1**
(45) Date de publication et mention de la délivrance du brevet: **18.03.2026**
(21) Numéro de dépôt: 22839871.5
(22) Date de dépôt: 02.12.2022
(51) Int. Cl.: F01D 9/06, F01D 25/12, H02G 3/04

(54) **BRAS DE SERVITUDE POUR UN CARTER D'ÉCHAPPEMENT D'UNE TURBOMACHINE**
SERVICEARM FÜR EIN TURBOMASCHINENABGASGEHÄUSE
SERVICE ARM FOR A TURBOMACHINE EXHAUST CASING

(30) Priorité: 03.12.2021 FR 2112942
(43) Date de publication de la demande: 09.10.2024
(73) Titulaire: SAFRAN AIRCRAFT ENGINES, 75015 Paris (FR)
(72) Inventeur: RENON, Olivier, 77550 MOISSY-CRAMAYEL (FR); AKACHKACHY, Soufien, 77550 MOISSY-CRAMAYEL (FR); LHUILLERY, Gilles, Gérard, 77550 MOISSY-CRAMAYEL (FR); RICQUEMAQUE, Lore, Marie, 77550 MOISSY-CRAMAYEL (FR)
(74) Mandataire: Regimbeau
(86) Numéro de dépôt international: PCT/FR2022/052227
(87) Numéro de publication internationale: WO 2023/099853

(56) Documents cités:
- FR-A1- 3 051 854
- FR-A1- 3 053 387
- FR-A1- 3 093 130

## Description

### DOMAINE DE L'INVENTION

La présente invention concerne des turbomachines, notamment des turbomoteurs aéronautiques, et plus particulièrement un carter d'échappement de turbomachine d'aéronef.

L'invention concerne plus particulièrement, mais non exclusivement, un carter d'échappement destiné à être utilisé dans un moteur de type USF (acronyme anglais de « Unducted Single Fan » pour soufflante unique non carénée), comprenant un aubage mobile et un aubage fixe de soufflante non-carénée de moteur d'aéronef.

### ETAT DE LA TECHNIQUE

Une turbomachine présente un axe longitudinal autour duquel elle s'étend et comporte typiquement, d'amont en aval dans le sens de l'écoulement des gaz, une soufflante, un compresseur basse pression, un compresseur haute pression, une chambre de combustion, une turbine haute pression, et une turbine basse pression comprenant notamment un carter d'échappement. Le carter d'échappement contribue à délimiter la veine primaire du fluide (ou flux primaire des gaz) traversant la turbomachine et assure, par l'intermédiaire du support de paliers, la concentricité entre le rotor et le stator de la turbomachine, ainsi que l'accrochage de l'aval du moteur à la nacelle.

Ce carter d'échappement comprend conventionnellement un moyeu, centré sur l'axe de la turbomachine, une virole externe, coaxiale avec le moyeu, et un ensemble de bras reliant le moyeu et la virole externe. Les bras se trouvent dans le flux primaire et sont par conséquents plus chauds que la virole externe et le moyeu. Les bras du carter d'échappement sont donc soumis à des gradients thermiques importants qui génèrent des contraintes mécaniques dans les bras ayant un impact sur la durée de vie du carter d'échappement.

Une turbomachine peut comprendre d'autres carters similaires tels qu'un carter intermédiaire (intercalé entre un compresseur basse pression et un compresseur haute pression de la turbomachine, et est donc traversé par un flux de gaz sortant du compresseur basse pression et destiné à alimenter le compresseur haute pression) ou un carter inter-turbine (intercalé entre la turbine haute pression et la turbine basse pression).

Le fonctionnement d'une turbomachine conventionnelle implique notamment le passage de câbles électriques et la circulation de divers fluides à travers la turbomachine, tels que de l'air, de l'huile, ou de l'air huilé. Afin d'acheminer ces fluides, il est connu de disposer des canalisations dans la structure même de la turbomachine. Certaines de ces canalisations, appelées tubes de servitude, doivent relier des parties radialement externes de la turbomachine à des parties radialement intemes, et ainsi traverser les flux d'air primaires et secondaires.

Il est connu de faire passer des éléments de servitude tels que les tubes de servitudes au sein de bras creux de carters, tels que les bras creux du carter d'échappement, sans perturber l'écoulement du flux à l'intérieur de la veine grâce à leur cavité interne. De manière générale, chacun des éléments de servitudes permet de relier au moins un premier équipement situé radialement à l'intérieur de la veine à au moins un deuxième équipement situé radialement à l'extérieur de la veine du carter.

Dans le cadre du développement de l'USF, de nombreux harnais électriques de puissance doivent passer dans le carter d'échappement pour les besoins d'hybridation électrique et d'intégration de capteurs de vitesse au niveau de l'arbre de turbine basse pression. Les technologies actuelles ne permettent cependant pas de tenir les températures usuelles subies par les bras du carter d'échappement dans une telle turbomachine. Il convient donc de refroidir les harnais en faisant circuler de l'air autour de ces derniers dans un espace restreint. Un exemple est décrit dans la demande de brevet FR 3053387. Or les solutions existantes ne permettent pas de refroidir le harnais dans un encombrement réduit, tout en tenant compte des dilatations thermiques induites par l'écoulement traversant le carter d'échappement et des risques de vibrations des harnais électriques.

### EXPOSE DE L'INVENTION

Un but de l'invention est de remédier aux inconvénients précités, en proposant une solution permettant de faire passer des harnais électriques de manière simple, ergonomique et peut encombrante à travers un bras d'un carter d'échappement, en tenant compte de l'environnement thermique sévère auquel les bras sont soumis et également pour résister aux vibrations générées par le moteur.

Il est à cet effet proposé, selon un premier aspect de l'invention un carter de turbomachine conforme à la revendication 1 et une turbomachine conforme à la revendication 10. Des modes de réalisation sont décrits dans les revendications dépendantes. Le carter de turbomachine peut par exemple correspondre à un carter d'échappement et comprendre :
- un moyeu interne s'étendant autour d'un axe ;
- une virole externe coaxiale au moyeu interne ;
- une pluralité de bras s'étendant du moyeu interne jusqu'à la virole externe, chaque bras présentant une paroi;
- des harnais électriques configurés pour raccorder un premier équipement électrique disposé radialement à l'extérieur de la virole externe et un deuxième équipement électrique disposé radialement à l'intérieur du moyeu interne ; et
- un fourreau s'étendant au sein d'un bras à distance de la paroi du bras, le fourreau comprenant une face interne délimitant une cavité interne configurée pour recevoir des harnais électriques ; et
- au moins une cale montée dans le fourreau, chaque cale étant configurée pour maintenir les harnais électriques à distance d'une face interne du fourreau.

Certaines caractéristiques préférées mais non limitatives du carter selon le premier aspect sont les suivantes, prises individuellement ou en combinaison :
- le fourreau loge au moins deux harnais électriques, la cale étant en outre configurée pour maintenir les au moins deux harnais électriques à distance les uns des autres au sein du fourreau ;
- la cale comprend au moins deux passages traversants, chaque harnais électrique étant logé dans un passage traversant correspondant ;
- le carter comprend en outre un système de ventilation en communication fluidique avec la cavité interne du fourreau ;
- le carter comprend en outre le deuxième équipement électrique disposé radialement à l'intérieur du moyeu interne, le fourreau s'étendant en outre entre le moyeu interne et le deuxième équipement électrique de sorte que le système de ventilation est en communication fluidique avec le deuxième équipement électrique ;
- la cale comprend en outre au moins une échancrure configurée pour permettre une circulation de fluide entre la virole externe et le moyeu interne afin de mettre en communication fluidique le deuxième équipement électrique avec le système de ventilation ;
- le carter comprend en outre un isolant thermique fixé sur une face externe du fourreau ;
- le fourreau est monté de façon mobile par rapport à l'un au moins parmi la virole externe et le moyeu interne en autorisant un débattement radial du fourreau par rapport à la virole externe et/ou par rapport au moyeu interne ;
- la cale présente des zones d'appui configurées pour venir en contact avec la face interne du fourreau afin de maintenir les harnais électriques à distance de la face interne du fourreau, les zones d'appui pouvant être courbes ou planes ; et/ou
- le carter comprend au moins deux harnais électriques et au moins deux portions de fourreau formant un fourreau qui s'étendent au sein du bras, les au moins deux portions de fourreau étant disposées bout-à-bout le long des harnais électriques de sorte à former un fourreau qui entoure les harnais électriques.

Selon un deuxième aspect, l'invention propose une turbomachine comprenant un carter conforme au premier aspect. Dans un mode de réalisation, le carter se situant dans une veine primaire de la turbomachine. La turbomachine peut en outre comprendre une unique soufflante non carénée. Le cas échéant, la turbomachine peut être du type USF ou comprendre une soufflante carénée.

Selon un troisième aspect, l'invention propose un aéronef comprenant une turbomachine comportant un carter conforme au premier aspect. La turbomachine peut en outre être conforme au deuxième aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue partie d'un carter d'échappement conforme à un mode de réalisation de l'invention ;

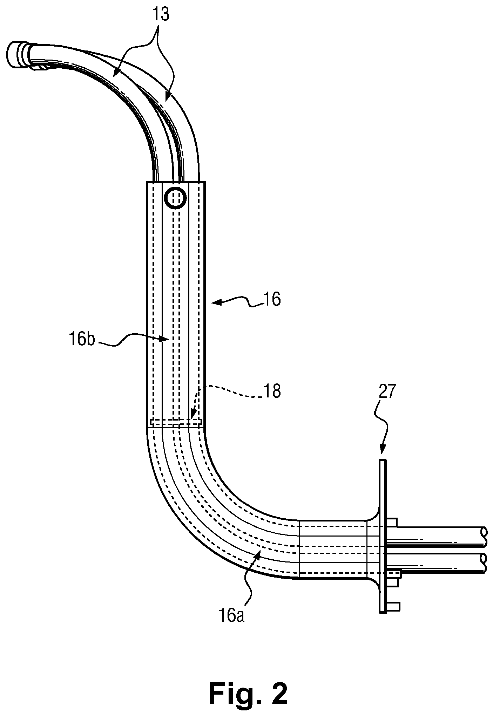

La figure 2 représente le fourreau et les harnais de la figure 1 ;

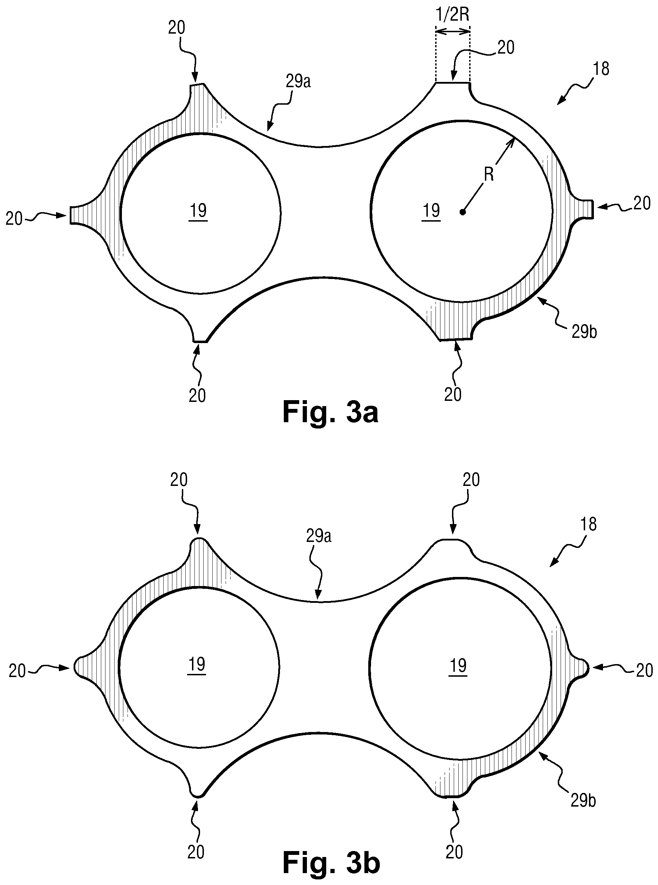

La figure 3a est une vue du dessus d'un premier exemple de réalisation d'une cale pouvant être utilisée dans un carter conforme à l'invention ;
La figure 3b est une vue du dessus d'un deuxième exemple de réalisation d'une cale pouvant être utilisée dans un carter conforme à l'invention ;

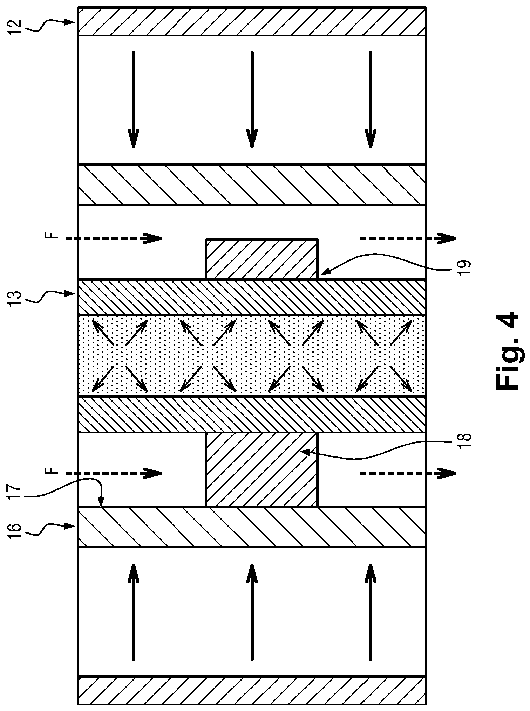

La figure 4 est une vue en coupe partielle prise dans un plan comprenant l'axe X et un axe radial passant par le bras du carter de la figure 1 ;

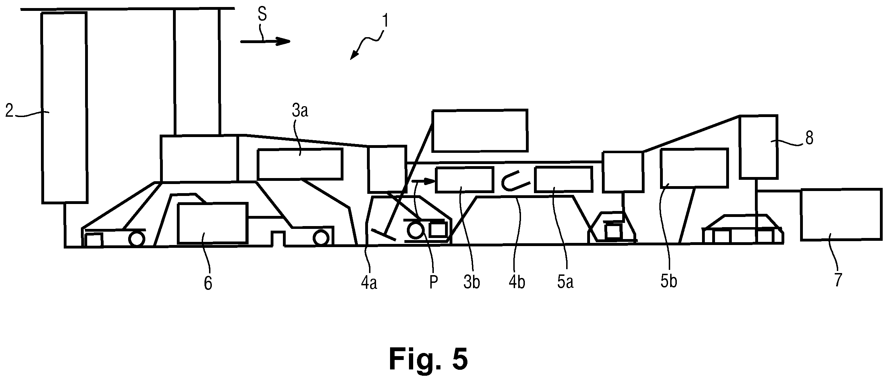

La figure 5 est une vue schématique d'un exemple de turbomachine pouvant comprendre un carter d'échappement conforme à un mode de réalisation de l'invention.

Sur l'ensemble des figures, les éléments similaires portent des références identiques.

### DESCRIPTION DETAILLEE DE L'INVENTION

Comme décrit ci-avant, une turbomachine 1 d'un aéronef 100 comporte typiquement, d'amont en aval dans le sens de l'écoulement des gaz, une soufflante 2, un compresseur basse pression, un compresseur haute pression, une chambre de combustion, une turbine haute pression, une turbine basse pression et un carter d'échappement 8 s'étendant globalement autour d'un axe longitudinal X et se situe dans une veine primaire de la turbomachine 1. Un exemple de turbomachine 1 pouvant comprendre un carter d'échappement conforme à l'invention est un moteur de type USF. L'invention n'est cependant pas limitée à ce type de moteur et trouve application dans toute turbomachine comprenant un carter d'échappement.

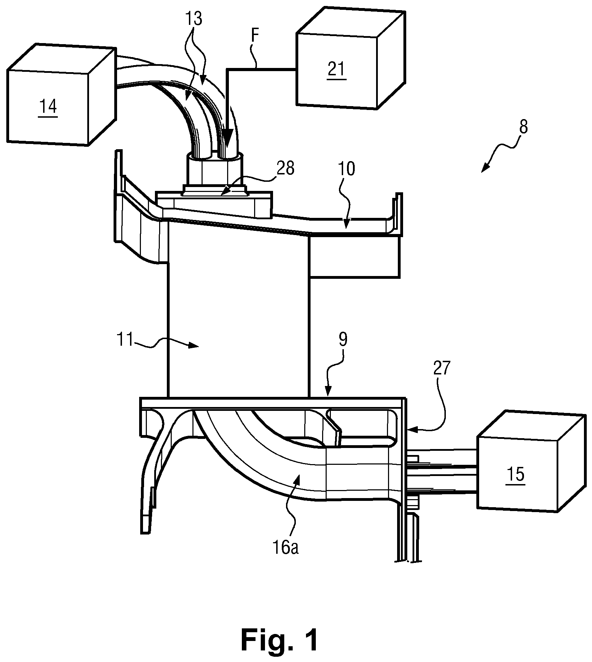

Ainsi, on a représenté à la figure 1 un exemple de turbomachine 1 hybride d'aéronef pouvant comprendre un carter d'échappement conforme à un mode de réalisation de l'invention. A l'instar des turbomachines connues de l'état de la technique, la turbomachine 1 est une turbomachine à double flux qui comporte, d'amont en aval, une soufflante 2, un compresseur basse pression 3a aussi appelé booster, un compresseur haute pression 3b, une chambre de combustion, une turbine haute pression 5a, et une turbine basse pression 5b. En aval de la turbine basse pression 5b est agencé un carter d'échappement 8. A l'extrémité aval de ce carter d'échappement et coaxialement à celui-ci est fixé un cône de tuyère, qui est un élément aérodynamique aussi appelé plug et qui permet de guider les gaz d'échappement en sortie de la turbomachine 1. Les compresseurs basse pression 3a et haute pression 3b, la chambre de combustion, la turbine haute pression 5a, et la turbine basse pression 5b délimitent une veine de gaz qui est traversée par un flux primaire P. Autour de ces éléments, la turbomachine 1 est également traversée par un flux secondaire S qui est entraîné par la soufflante 2. Les flux primaire P est secondaire S se rejoignent en sortie de la turbomachine 1. Le compresseur haute pression 3b et la turbine haute pression 5a sont reliés par un arbre haute pression 4b et forment un corps haute pression. Le compresseur basse pression 3a et la turbine basse pression 5b sont reliés par un arbre basse pression 4a et forment un corps basse pression. L'arbre basse pression 4a entraîne la soufflante 2 par l'intermédiaire d'un réducteur 6 qui est agencé sensiblement dans un carter avant de la turbomachine 1, aussi appelé carter d'entrée, au droit d'aubes fixes de guidage en sortie et qui redressent le flux secondaire S en aval de la soufflante 2. La turbomachine 1 comporte plusieurs carters, à savoir, comme on l'a déjà vu, le carter avant ou carter d'entrée qui supporte les aubes fixes de guidage en sortie et le carter d'échappement 8. Elle comporte aussi un carter intermédiaire agencé axialement entre le compresseur basse pression 3a et la chambre de combustion 3b, et un carter de turbine agencé axialement entre la turbine haute pression 5a et la turbine basse pression 5b. Une telle configuration de turbomachine 1 est connue sous l'acronyme (UHBR ID, acronyme anglo-saxon de Ultra High Bypass Ratio, Integral Drive), qui concerne des configurations de moteur à double flux comportant un corps haute pression et un corps basse pression qui entraîne quant à lui une soufflante carénée à très haut taux de dilution.

Dans un mode de réalisation, la turbomachine 1 est une turbomachine hybride, c'est-à-dire qu'elle comporte une machine électrique 7 qui est accouplée à l'arbre basse pression. L'architecture de turbomachine 1 hybride selon l'invention comporte plus particulièrement une machine électrique 7 (qui peut comprendre un générateur électrique ou un moteur électrique) qui est agencée en aval de la turbine basse pression 5b et du carter d'échappement 8, coaxialement à celui-ci selon axe principal X, et qui est logée dans le plug à l'intérieur d'une tuyère de la turbomachine 1. Pour son alimentation électrique, il est nécessaire qu'au moins un élément conducteur de transmission de puissance (harnais électrique) traverse la veine, ceci afin de permettre d'assurer la connexion électrique de la machine électrique 7 avec au moins un organe extérieur à la veine, et notamment avec la turbomachine 1. L'invention permet d'assurer le cheminement de cet élément conducteur de transmission de puissance en utilisant avantageusement le carter d'échappement 8.

Dans la présente demande, l'amont et l'aval sont définis par rapport au sens d'écoulement normal du gaz dans la turbomachine 1, et plus particulièrement au sein du carter 8 TRF. La direction axiale correspond à la direction de l'axe X et une direction radiale est une direction perpendiculaire à cet axe X et passant par lui. Sauf précision contraire, interne (respectivement, intérieur) et externe (respectivement, extérieur), respectivement, sont utilisés en référence à une direction radiale de sorte que la partie ou la face interne d'un élément est plus proche de l'axe X que la partie ou la face externe du même élément.

Le carter 8 d'échappement comprend un moyeu interne 9 coaxial avec l'axe longitudinal X, une virole externe 10 coaxiale avec le moyeu interne 9 et s'étendant autour du moyeu interne 9 un ensemble de bras 11 reliant mécaniquement le moyeu interne 9 et la virole externe 10.

Les bras 11 sont régulièrement répartis circonférentiellement autour du moyeu interne 9. Dans un mode de réalisation, les bras 11 s'étendent sensiblement radialement entre le moyeu interne 9 et la virole externe 10 du carter 8. Les bras 11 peuvent notamment être légèrement inclinés (d'environ 15°) suivant la direction circonférentielle.

Chaque bras 11 comprend une paroi 12 qui délimite un espace interne s'étendant radialement du moyeu interne 9 jusqu'à la virole 10, sur toute la longueur du bras 11 correspondant. Les bras 11 sont donc creux.

Le carter 8 comprend en outre des harnais électriques 13 de commande ou de puissance configurés pour raccorder des équipements électriques 14 (typiquement, un contrôleur et un générateur électrique) disposés radialement à l'extérieur de la virole externe 10 avec des équipements électriques 15 (typiquement, une machine électrique telle que la machine 7) disposés radialement à l'intérieur du moyeu interne 9, et un ou plusieurs fourreaux 16 s'étendant au sein d'un bras 11 à distance de la paroi 12 du bras 11. Le ou les fourreaux 16 sont raccordés au moyeu interne 9 et à la virole externe 10 par l'intermédiaire de liaisons mécaniques. Chaque fourreau 16 comprend une face interne 17 délimitant une cavité interne configurée pour recevoir un ou plusieurs harnais électriques 13. On notera que seul l'un des bras 11 du carter 8 peut comprendre un tel fourreau 16. En variante, plusieurs ou chaque bras 11 du carter 8 peut comprendre un fourreau 16.

Afin de protéger les harnais électriques 13 de l'environnement thermique et vibratoire du carter 8 dans un encombrement restreint, le carter 8 comprend en outre une cale 18 montée dans chaque fourreau 16. La cale 18 est configurée pour maintenir les harnais électriques 13 à distance d'une face interne 17 du fourreau 16 correspondant. A cet effet, la cale 18 peut comprendre un passage traversant 19 le harnais électrique 13. En particulier, chaque passage traversant 19 est configuré pour recevoir un harnais électrique 13 correspondant. De préférence, la dimension du passage traversant 19 est ajustée en fonction du diamètre du harnais électrique 13 correspondant afin que la cale 18 puisse maintenir le harnais électrique 13 avec serrage (sans jeu). En variante, la cale 18 peut être montée de manière à assurer un centrage glissant dans le fourreau 16.

La cale 18 permet ainsi d'éviter le contact entre les harnais électriques 13 et le fourreau 16 afin de limiter l'usure des harnais électriques 13 en maintenant un entrefer constant entre les harnais électriques 13 et le fourreau 16. La cale 18 permet en outre d'éviter la conduction thermique entre le fourreau 16 (qui est logé dans un bras 11 placé dans un écoulement gazeux chaud, en sortie de turbine), et les harnais électriques 13, qui génèrent eux-mêmes des calories (notamment lorsqu'ils sont en forte charge électrique). La cale 18 permet en outre de contrôler les modes dynamiques des harnais électriques 13.

Dans un premier mode de réalisation, le carter 8 comprend au moins deux harnais électriques 13 (par exemple trois) qui sont logés dans un même fourreau 16. Une cale 18 est alors montée dans le fourreau 16 de sorte à maintenir chaque harnais électrique 13 à distance de la face interne 17 du fourreau 16. La cale 18 est en outre configurée pour maintenir un entrefer entre les harnais électriques 13 logés dans ce fourreau 16 afin de garantir les spécifications thermiques et/ou électriques des harnais.

A cet effet, dans une forme de réalisation, chaque cale 18 comprend autant de passages traversants 19 qu'il y a de harnais électriques 13, chaque passage traversant 19 étant configuré pour recevoir et être traversé par un harnais électrique 13 correspondant. Les passages traversants 19 sont de préférence non communicants, et dans tous les cas configurés de sorte que la cale 18 assure une séparation physique entre les harnais électriques 13 au sein du fourreau 16. Par exemple, lorsque le fourreau 16 loge exactement deux harnais électriques 13, la cale 18 peut comprendre deux passages traversants 19 disjoints.

Les passages traversants 19 peuvent par exemple être circulaires ou ovoïdes.

Dans un deuxième mode de réalisation, le carter 8 comprend deux harnais électriques 13 (ou plus) logés chacun dans une portion de fourreau 16 correspondante au sein de la cavité interne du bras 11. Le fourreau 16 logé dans le bras 11 comprend alors autant de portions de fourreaux que de harnais électrique 13 à faire passer le long du bras 11 entre la virole externe 10 et le moyeu interne 9. Chaque harnais électrique 13 traverse donc une portion du fourreau 16 correspondant. Une cale 18 est alors montée dans chaque portion de fourreau 16 de sorte à maintenir le harnais électrique 13 correspondant à distance de la face interne 17 de la portion de fourreau 16 correspondante. Les portions du fourreau 16 sont en outre fixées solidairement ensemble afin d'assurer leur maintien mécanique et de limiter leurs déformations sous charge, par exemple par collage ou à l'aide d'un séparateur mécanique. Le passage traversant 19 peut par exemple être circulaire ou ovoïde.

Dans ce mode de réalisation, chaque portion du fourreau forme une enveloppe fermée autour du ou des harnais électriques qu'elle reçoit. Les portions du fourreau 16 sont par ailleurs disposées bout-à-bout le long des harnais électriques 13 de sorte à former ensemble le fourreau 16.

Le premier et le deuxième mode de réalisation peuvent bien entendu être combinés. Ainsi, le bras 11 peut comprendre plusieurs fourreaux 16, chaque fourreau 16 logeant au moins un harnais électrique 13 et une cale 18 séparant le harnais électrique 13 correspondant de la face interne 17 du fourreau 16 et, le cas échéant, d'un autre harnais électrique 13 logé dans le même fourreau 16. Les fourreaux 16 sont en outre fixés solidairement ensemble comme décrit plus haut.

Chaque cale 18 peut être montée sur le (ou les) harnais électriques 13 et/ou sur la face interne 17 du fourreau 16 correspondant.

Dans une première forme de réalisation, la cale 18 est intégrée directement aux couches externes des harnais électriques 13 qu'elle reçoit et est monolithique avec ces harnais électriques 13. En variante, la cale 18 peut être rapportée et fixée, par exemple par collage, sur les harnais électriques 13.

Dans une deuxième forme de réalisation, la cale 18 est fixée sur la face interne 17 du fourreau 16, par exemple par collage.

La cale 18 peut être mobile en translation par rapport aux harnais électriques 13 ou au fourreau 16 afin de tenir compte notamment des dilatations thermiques du fourreau 16 et/ou du bras 11. Dans ce cas, la cale 18 est fixée uniquement sur les harnais électriques 13 ou sur le fourreau 16. En variante, la cale 18 peut être à la fois fixée sur le harnais et le fourreau 16.

Le cas échéant, chaque fourreau 16 peut comprendre plusieurs cales 18 réparties le long du fourreau 16 entre la virole externe 10 et le moyeu interne 9.

Le fourreau 16 peut présenter toute forme adaptée. De préférence, le fourreau 16 présente toute forme cylindrique adaptée (ovale, oblong, losange, etc.). Par exemple, le fourreau 16 est cylindrique de révolution. Il peut être hydroformé et/ou mécano-soudé. Le fourreau 16 peut être réalisé dans tout matériau approprié, par exemple de l'acier inoxydable ou encore en matériau composite à matrice céramique.

La cale 18 peut être réalisée dans le même matériau que le fourreau 16.

Chaque fourreau 16 est en outre isolé thermiquement afin de protéger les harnais électriques 13 des températures élevées subies par le bras 11 du carter 8. A cet effet, le fourreau 16 peut être calorifugé de manière conventionnelle en utilisant les isolants thermiques habituellement utilisés pour les servitudes d'huile dans les carter 8s d'échappement. Les isolants thermiques peuvent par exemple comprendre de la laine de verre ou de la silice et être fixés sur des demi-coquilles montées sur la face externe du fourreau 16 ou enfilés à la manière d'une chaussette sur la face externe du fourreau 16.

La cale 18 comprend des zones d'appui 20 configurées pour venir en contact avec la face interne 17 du fourreau 16 et assurer l'entrefer entre les harnais électriques 13 et le fourreau 16. En particulier, la cale 18 peut comprendre une pluralité de zones d'appui 20 discrètes réparties sur sa circonférence. Les zones d'appui 20 sont séparées deux à deux par des échancrures permettant de réduire la masse des bagues et, comme nous le verrons par la suite, d'assurer la circulation d'un fluide de refroidissement entre la cale 18 et le fourreau 16.

Par exemple, la cale 18 peut comprendre quatre zones d'appui 20 réparties de façon équidistante le long de sa circonférence. Lorsque la cale 18 reçoit plusieurs harnais électriques 13, la cale 18 comprend au moins deux fois plus de zones d'appui 20 qu'elle ne loge de harnais électriques 13, de préférence trois fois plus de zones d'appui 20. Ainsi, lorsque la cale 18 comprend deux passages traversants 19 recevant chacun un harnais électrique 13 correspondant, elle comprend au moins six zones d'appui 20 se faisant face deux à deux afin d'assurer une répartition équilibrée des contacts.

Lorsque la cale 18 est fixée sur les harnais électriques 13 et afin de limiter les frottements entre la cale 18 et le fourreau 16, les zones d'appui 20 peuvent être sensiblement planes et conformées de sorte à présenter une longueur au plus égal à la moitié du rayon R du passage traversant 19 formé dans la cale 18. En variante, les zones d'appui 20 peuvent être courbes.

Le carter 8 comprend en outre un système de ventilation 21 configuré pour refroidir les harnais électriques 13 afin d'évacuer les calories générées par les harnais électriques 13 lorsqu'ils sont en forte charge et de protéger les harnais électriques 13 des températures élevées pouvant être atteintes en fonctionnement au sein du carter 8. Le système de ventilation 21 peut en particulier être disposé radialement à l'extérieur de la virole externe 10 et être raccordé fluidiquement au fourreau 16 par l'intermédiaire de gaines adaptées.

Dans une forme de réalisation, le fluide de refroidissement F (air) circulant dans le fourreau 16 est également utilisé pour refroidir un équipement électrique 15 disposé radialement à l'intérieur du moyeu interne 9, par exemple une machine électrique logée dans une enceinte au sein du moyeu interne 9. Pour cela, le fourreau 16 est raccordé mécaniquement à l'enceinte afin de mettre en communication fluidique la cavité définie par l'enceinte et logeant l'équipement électrique 15 avec le système de ventilation 21. Le fourreau 16 peut par exemple comprendre une portion 16a s'étendant au sein du moyeu interne 9 qui est raccordée mécaniquement à l'enceinte. Le fourreau 16 s'étend alors au sein du bras 11, de la virole externe 10 au moyeu interne 9, ainsi qu'au sein du moyeu interne 9. La partie 16b logée dans le bras 11 peut être sensiblement rectiligne. La portion 16a du fourreau 16 logée dans le moyeu interne 9 peut être courbe selon la position de l'enceinte afin de raccorder le fourreau 16 à l'enceinte. Dans une forme de réalisation, l'extrémité radiale interne du fourreau 16 peut comprendre une platine 27 afin de permettre son raccordement mécanique à l'enceinte par des organes de fixation adaptés, par exemple des boulons. Le cas échéant, l'enceinte et/ou la platine 27 peuvent comprendre une série de trous oblongs configurés pour recevoir les boulons afin de tenir compte des tolérances géométriques du bras 11 (supérieures au millimètre).

Le fourreau 16 peut être monté sur la virole externe 10 par l'intermédiaire d'une liaison glissière 28 de sorte à permettre un débattement radial du fourreau 16 par rapport à la virole externe 10. De la sorte, le fourreau 16 est susceptible de glisser radialement par rapport au bras 11 afin de tenir compte des dilatations thermiques différentielles entre le fourreau 16, relativement froid (car contenant les harnais électriques 13 et la ventilation de refroidissement des harnais et le cas échéant de l'équipement électrique), et le carter 8 qui est chauffé par la veine primaire en sortie de turbine. La liaison glissière 28 peut par exemple comprendre une pièce intermédiaire se fixant sur un bossage appartenant à la virole externe 10 du carter 8, en sortie de bras 11.

Le fourreau 16 peut également être monté sur le moyeu interne 9 par l'intermédiaire d'une liaison glissière 28 de sorte à permettre un débattement radial du fourreau 16 par rapport au moyeu interne 9. Ce glissement radial en partie interne du fourreau 16 permet en particulier de régler et maintenir en fonctionnement le jeu entre le fourreau 16 et le bras 11 et éviter tout contact entre fourreau 16 et bras 11, mais également de limiter les modes dynamiques du fourreau 16.

Par ailleurs, comme indiqué précédemment, la cale 18 comprend une ou plusieurs échancrures 29a, 29b permettant le passage du fluide de refroidissement F envoyé par le système de ventilation 21 entre la cale 18 et le fourreau 16. De préférence, la cale 18 comprend une échancrure 29a, 29b entre chaque zone d'appui.

Dans l'exemple de réalisation illustré sur les figures, la cale 18 est sensiblement plane et comprend deux lobes raccordés par un pontet central, chaque lobe comprenant un passage traversant 29 circulaire. Les bords externes de chaque lobe sont sensiblement circulaires et coaxiaux au passage traversant 29 correspondant. Ici, la cale 18 est symétrique par rapport à un plan passant par le pontet central. Ceci n'est cependant pas limitatif, les harnais électriques 13 reçus par la cale 18 pouvant avoir des dimensions différentes, de sorte que les diamètres des passages traversants 19 pourraient être différents au sein de la cale 18.

La cale 18 comprend six zones d'appui 20, dont trois zones d'appui 20 équiréparties autour de chaque lobe et formées par exemple par des protubérances faisant saillie dans le plan depuis le nord externe des lobes. Bien entendu, la cale 18 pourrait comprendre un plus grand nombre de zones d'appui 20. Dans cet exemple, deux des zones d'appui 20 de la cale 18 sont placées au niveau des extrémités les plus éloignées de la cale 18, les quatre autres zones d'appui 20 étant placées deux à deux à 90° environ des zones d'appui 20 les plus éloignées. Deux échancrures concaves 29a sont formées dans la cale 18 entre les deux paires de zones d'appui 20 qui entourent le pontet central, et quatre échancrures convexes 29b (délimitées par les bords externes circulaires des lobes) sont formées dans la cale 18 entre les paires de zones d'appui 20 qui entourent les lobes. On comprendra que la forme des échancrures 29a, 29b n'est cependant pas limitative, la cale 18 pouvant ne comprendre par exemple que les échancrures concaves 29a ou que les échancrures convexes 29b.

## Revendications

1. Carter (8) de turbomachine (1), par exemple un carter d'échappement, comprenant :
- un moyeu interne (9) s'étendant autour d'un axe (X) ;
- une virole externe (10) coaxiale au moyeu interne (9) ;
- une pluralité de bras (11) s'étendant du moyeu interne (9) jusqu'à la virole externe (10), chaque bras (11) présentant une paroi (12);
- des harnais électriques (13) configurés pour raccorder un premier équipement électrique (14) disposé radialement à l'extérieur de la virole externe (10) et un deuxième équipement électrique (15) disposé radialement à l'intérieur du moyeu interne (9) ; et
- un fourreau (16) s'étendant au sein d'un bras (11) à distance de la paroi (12) du bras (11), le fourreau (16) comprenant une face interne (17) délimitant une cavité interne configurée pour recevoir des harnais électriques (13) ;
le carter (8) comprend en outre au moins une cale (18) montée dans le fourreau (16), chaque cale (18) étant configurée pour maintenir les harnais électriques (13) à distance d'une face interne (17) du fourreau (16), et **caractérisé en ce que** le fourreau (16) loge au moins deux harnais électriques (13), la cale (18) étant en outre configurée pour maintenir les au moins deux harnais électriques (13) à distance les uns des autres au sein du fourreau (16).

2. Carter (8) selon la revendication 1, dans lequel la cale (18) comprend au moins deux passages traversants (19), chaque harnais électrique (13) étant logé dans un passage traversant (19) correspondant.

3. Carter (8) selon l'une des revendications 1 et 2, comprenant en outre un système de ventilation (21) en communication fluidique avec la cavité interne du fourreau (16).

4. Carter (8) selon la revendication 3, comprenant en outre le deuxième équipement électrique (15) disposé radialement à l'intérieur du moyeu interne (9), le fourreau (16) s'étendant en outre entre le moyeu interne (9) et le deuxième équipement électrique (15) de sorte que le système de ventilation (21) est en communication fluidique avec le deuxième équipement électrique (15).

5. Carter (8) selon l'une des revendications 3 et 4, dans lequel la cale (18) comprend en outre au moins une échancrure (29a, 29b) configurée pour permettre une circulation de fluide entre la virole externe (10) et le moyeu interne (9) afin de mettre en communication fluidique le deuxième équipement électrique (15) avec le système de ventilation (21).

6. Carter (8) selon l'une des revendications 1 à 5, comprenant en outre un isolant thermique fixé sur une face externe du fourreau (16).

7. Carter (8) selon l'une des revendications 1 à 6, dans lequel le fourreau (16) est monté de façon mobile par rapport à l'un au moins parmi la virole externe (10) et le moyeu interne (9) en autorisant un débattement radial du fourreau (16) par rapport à la virole externe (10) et/ou par rapport au moyeu interne (9).

8. Carter (8) selon l'une des revendications 1 à 7, dans lequel la cale (18) présente des zones d'appui (20) configurées pour venir en contact avec la face interne (17) du fourreau (16) afin de maintenir les harnais électriques (13) à distance de la face interne (17) du fourreau (16), les zones d'appui (20) pouvant être courbes ou planes.

9. Carter (8) selon l'une des revendications 1 à 8, comprenant au moins deux harnais électriques (13) et au moins deux portions de fourreau formant un fourreau (16) qui s'étendent au sein du bras (11), les au moins deux portions de fourreau étant disposées bout-à-bout le long des harnais électriques (13) de sorte à former un fourreau (16) qui entoure les harnais électriques (13).

10. Turbomachine (1) comprenant un carter (8) selon l'une des revendications 1 à 9, le carter se situant dans une veine primaire de la turbomachine (1).

## Patentansprüche

1. Gehäuse (8) einer Turbomaschine (1), beispielsweise ein Abgasgehäuse, umfassend:
- eine innere Nabe (9), die sich um eine Achse (X) erstreckt;
- einen äußeren Ring (10), der koaxial zur inneren Nabe (9) ist;
- eine Vielzahl von Armen (11), die sich von der inneren Nabe (9) bis zum äußeren Ring (10) erstrecken, wobei jeder Arm (11) eine Wand (12) aufweist;
- elektrische Kabelbäume (13), die ausgelegt sind, um eine erste elektrische Ausrüstung (14), die radial außerhalb des äußeren Rings (10) angeordnet ist, und eine zweite elektrische Ausrüstung (15), die radial innerhalb der inneren Nabe (9) angeordnet ist, anzuschließen; und
- einen Mantel (16), der sich innerhalb eines Arms (11) in einem Abstand von der Wand (12) des Arms (11) erstreckt, wobei der Mantel (16) eine Innenseite (17) aufweist, die einen inneren Hohlraum begrenzt, der ausgelegt ist, um elektrische Kabelbäume (13) aufzunehmen;
wobei das Gehäuse (8) ferner mindestens einen in dem Mantel (16) angebrachten Keil (18) umfasst, wobei jeder Keil (18) ausgelegt ist, um die elektrischen Kabelbäume (13) in einem Abstand zu einer Innenseite (17) des Mantels (16) zu halten, und **dadurch gekennzeichnet, dass** der Mantel (16) mindestens zwei elektrische Kabelbäume (13) aufnimmt, wobei der Keil (18) ferner ausgelegt ist, um die mindestens zwei elektrischen Kabelbäume (13) innerhalb des Mantels (16) voneinander beabstandet zu halten.

2. Gehäuse (8) nach Anspruch 1, wobei der Keil (18) mindestens zwei Durchgangskanäle (19) umfasst, wobei jeder elektrische Kabelbaum (13) in einem entsprechenden Durchgangskanal (19) untergebracht ist.

3. Gehäuse (8) nach einem der Ansprüche 1 und 2, das ferner ein Belüftungssystem (21) umfasst, das in Fluidverbindung mit dem inneren Hohlraum des Mantels (16) steht.

4. Gehäuse (8) nach Anspruch 3, das ferner die zweite elektrische Ausrüstung (15) umfasst, die radial im Inneren der inneren Nabe (9) angeordnet ist, wobei sich der Mantel (16) ferner zwischen der inneren Nabe (9) und der zweiten elektrischen Ausrüstung (15) erstreckt, so dass das Belüftungssystem (21) in Fluidverbindung mit der zweiten elektrischen Ausrüstung (15) steht.

5. Gehäuse (8) nach einem der Ansprüche 3 und 4, wobei der Keil (18) ferner mindestens eine Aussparung (29a, 29b) aufweist, die ausgelegt ist, um eine Fluidströmung zwischen dem äußeren Ring (10) und der inneren Nabe (9) zu gestatten, um die zweite elektrische Ausrüstung (15) mit dem Belüftungssystem (21) in Fluidverbindung zu versetzen.

6. Gehäuse (8) nach einem der Ansprüche 1 bis 5, das ferner eine an einer Außenfläche des Mantels (16) befestigte Wärmeisolierung umfasst.

7. Gehäuse (8) nach einem der Ansprüche 1 bis 6, wobei der Mantel (16) relativ zu mindestens einem der Elemente äußerer Ring (10) und innere Nabe (9) beweglich angebracht ist, indem eine radiale Auslenkung des Mantels (16) relativ zum äußeren Ring (10) und/oder relativ zur inneren Nabe (9) gestattet wird.

8. Gehäuse (8) nach einem der Ansprüche 1 bis 7, wobei der Keil (18) Auflagebereiche (20) aufweist, die ausgelegt sind, um mit der Innenseite (17) des Mantels (16) in Kontakt zu kommen, um die elektrische Kabelbäume (13) von der Innenseite (17) des Mantels (16) beabstandet zu halten, wobei die Auflagebereiche (20) gekrümmt oder flach sein können.

9. Gehäuse (8) nach einem der Ansprüche 1 bis 8, umfassend mindestens zwei elektrischen Kabelbäume (13) und mindestens zwei Mantelabschnitte, die einen Mantel (16) bilden, die sich innerhalb des Arms (11) erstrecken, wobei die mindestens zwei Mantelabschnitte endweise entlang der elektrischen Kabelbäume (13) so angeordnet sind, dass ein Mantel (16) gebildet wird, der die elektrischen Kabelbäume (13) umgibt.

10. Turbomaschine (1), umfassend ein Gehäuse (8) nach einem der Ansprüche 1 bis 9, wobei sich das Gehäuse in einem Primärkanal der Turbomaschine (1) befindet.

## Claims

1. A casing (8) for a turbomachine (1), for example an exhaust casing, comprising:
- an internal hub (9) extending around an axis (X);
- an external flange (10) coaxial with the internal hub (9) ;
- a plurality of arms (11) extending from the internal hub (9) to the external flange (10), each arm (11) having a wall (12);
- wire harnesses (13) configured to connect a first electrical apparatus (14) which is arranged radially outside the external flange (10) and a second electrical apparatus (15) arranged radially inside the internal hub (9); and
- a sheath (16) extending within an arm (11) at a distance from the wall (12) of the arm (11), the sheath (16) comprising an internal face (17) defining an internal cavity configured to receive the wire harnesses (13) ;
the casing (8) comprises at least one shim (18) mounted in the sheath (16), each shim (18) being configured to hold the wire harnesses (13) at a distance from an internal face (17) of the sheath (16), and **characterized in that** the sheath (16) houses at least two wire harnesses (13), the shim (18) also being configured to hold the at least two wire harnesses (13) at a distance from one another within the sheath (16).

2. The casing (8) according to claim 1, wherein the shim (18) comprises at least two through passages (19), each wire harness (13) being housed in a corresponding through passage (19).

3. The casing (8) according to one of claims 1 and 2, further comprising a ventilation system (21) in fluid communication with the internal cavity of the sheath (16).

4. The casing (8) according to claim 3, further comprising a second electrical apparatus (15) arranged radially inside the internal hub (9), the sheath (16) also extending between the internal hub (9) and the second electrical apparatus (15) so that the ventilation system (21) is in fluid communication with the second electrical apparatus (15).

5. The casing (8) according to one of claims 3 and 4, wherein the shim (18) also comprises at least one indentation (29a, 29b) configured to allow circulation of fluid between the external flange (10) and the internal hub (9) in order to place the second electrical apparatus (15) in fluid communication with the ventilation system (21).

6. The casing (8) according to one of claims 1 to 5, also comprising a thermal insulator attached to an external face of the sheath (16).

7. The casing (8) according to one of claims 1 to 6, wherein the sheath (16) is movably mounted relative to at least one of the external flange (10) and the internal hub (9) by allowing radial travel of the sheath (16) relative to the external flange (10) and/or relative to the internal hub (9).

8. The casing (8) according to one of claims 1 to 7, wherein the shim (18) has support zones (20) configured to come into contact with the internal face (17) of the sheath (16) in order to hold the wire harnesses (13) at a distance from the internal face (17) of the sheath (16), the support zones (20) being able to be curved or flat.

9. The casing (8) according to one of claims 1 to 8, comprising at least two wire harnesses (13) and at least two sheath portions forming a sheath (16) which extends within the arm (11), the at least two sheath portions being arranged end-to-end along the wire harnesses (13) so as to form a sheath (16) which surrounds the wire harnesses (13).

10. A turbomachine (1) comprising a casing (8) according to one of claims 1 to 9, the casing being located in a primary stream of the turbomachine (1).
